Europäisches Patentamt

European Patent Office

Office européen des brevets

(11) Publication number: **0 469 660 A1**

# EUROPEAN PATENT APPLICATION

(21) Application number: **91201777.9**

(22) Date of filing: **09.07.91**

(51) Int. Cl.5: **B65H 54/76**, B65G 19/02, B65G 23/34

(30) Priority: **25.07.90 IT 2104790**

(43) Date of publication of application:
**05.02.92 Bulletin 92/06**

(84) Designated Contracting States:
**BE CH DE ES FR GB GR LI**

(71) Applicant: **SAVIO S.p.A.**
**Via Udine 105**
**I-33170 Pordenone(IT)**

(72) Inventor: **Mirri, Alessandro**
**Via Emilia Ponente, 9**
**I-40026 Imola (Bologna)(IT)**
Inventor: **Minguzzi, Eraldo**
**Via Golfari, 3**
**I-48012 Bagnacavallo (Ravenna)(IT)**

(74) Representative: **Henke, Erwin et al**
**Ing.Barzanò & Zanardo S.p.A. Via**
**Borgonuovo, 10**
**I-20121 Milano(IT)**

(54) **Device for changing over web containers, especially for textile drawing frames.**

(57) This invention concerns a device for changing over containers of fibre web emerging from the drawing head of a drawing frame for drawing fibres, in which the fibre web is continuously fed into the container which is located in the filling station, while empty containers, waiting on a fixed platform, are ready for the automatic changeover between the filled containers and the empty containers. This device comprises a system with several sprocket chain links (1, 2, 3), one after the other, driven by a single drive source (5), and where each sprocket (1, 2, 3) chain link, moving on a basically horizontal plane $(P_1, P_2, P_3)$, moves and pushes the individual container with a peg (1a, 2a, 3a). This peg (1a, 2a, 3a) is attached to a component of the chain as a single piece, and in a vertical position projecting from the plane of movement of the sprocket chain link.

Fig.1

This invention refers to a device for changing over containers of fibre web emerging from the drawing head of a drawing frame for drawing fibres, in which the fibre web is fed continuously into the container during the filling stage, while empty containers are ready for the automatic changeover with the filled container.

A drawing frame comprises at least one drawing head prepared for drawing cotton webs or other webs of textile material.

At the outlet of the drawing head, there is a rotation device whose function is to deposit the webs in a spiral shape in a vessel, on in any container, so that they may easily be reeled onto the subsequent machines.

With the current high drawing production levels, it is important for these vessels or containers to have a large capacity so as to minimize maintenance and, in particular, joins in the webs.

The use of these large containers leads to an indisputable problem caused by their considerable size and not insignificant weight. The size and weight make the job of the service staff assigned to these movements hard and difficult. Manual interventions by the operator also entail relatively high labour costs because of the number of staff required for supervision at the outlet from the drawing heads.

It is understandable that a delay by the operator in replacing a filled container with an empty container will cause the drawing frame to stop, so making it necessary for the service operator to intervene, who will also have to reset the drawing frame's entire starting cycle. This results in an interruption in production which, depending on its duration, represents a significant factor in calculating the costs of production of a textile article.

It has therefore always been attempted to change over the containers without involving staff, i.e. automatically, since in this way the above problems can be avoided.

Devices or automatic systems for changing over containers are already known, but they do not provide any general satisfactory solution.

They are structurally complicated and so very expensive, and they require a disproportionate amount of space since they mainly use rod pushers driven by pneumatic or hydraulic-pneumatic actuators, which often exert collision pushing forces on the containers so damaging them or creating jams during the changeover.

The main purpose of this invention is therefore to ensure the orderly and reliable performance of the entire changeover stage in which the container filled with fibre web is replaced with an empty container at the outlet of the drawing head, so that the faults and disadvantages associated with the current technological arrangements may be avoided.

A further purpose of this invention is to provide a device which has a simple structure and is shaped in such a way that the changeover between the full container and the empty container can take place quickly and without any trouble. Since the containers must be changed under the outlet of the fibre web which falls continuously like a water jet, the fibre web must pass from the full container to the empty container as quickly as possible, so as to avoid unnecessary feeding of the fibre web which falls outside the container positioned for replacement.

It has therefore always been attempted to make the changeover of containers without the involvement of staff, i.e. automatically, since in this way the above-mentioned requirements can be met with maximum reliability.

Henceforth, for the sake of brevity, reference will be made to the use of this invention at the outlet of drawing heads on textile drawing frames, although it remains understood that the statements concerning the said drawing frames also apply to any textile machine where, for an automatic changeover, a device is required for changing over containers or any vessels, and the differences which distinguish the various types of thextile machines do not interfere with the device of the invention. The device covered by the invention does not in any way alter the intrinsic system of operation of the drawing head on the drawing frame, and therefore the conventional drawing machine will not be mentioned; instead reference will only be made to the fibre web's position of emergence from the overlying drawing head. This drawing equipment and the rotating device for depositing the fibre web in the container below are already of known technology, and so they are not shown in the Figures since they are not essential for an understanding of the automatic changeover device for replacing the full container with an empty container.

In accordance with the above and the aforesaid faults and disadvantages associated with the current technological arrangments, this invention concerns a device for the changeover of containers for fibre web emerging from the drawing head of a drawing frame for drawing fibres, in which the fibre web is fed continuously into the container during filling, while empty containers, waiting on a fixed platform, are ready to replace the filled containers; this device comprises a system with several sprocket chain links where each sprocket chain link moving on a basically horizontal plane moves and pushes the individual container with a peg which is attached to a component of the chain as a single piece, and in a vertical position projecting from the plane of movement of the sprocket chain. The individual chain link is moved at the same time as the other chain links by means of a single drive source, and each of the said links has only one push peg.

The sprocket chain links are all of the same length and they move simultaneously by means of toothed drive wheels which are all the same, so as to obtain the same movements and the same movement cycles which always enable the same initial positions of the pushing pegs to be resumed in perfect synchrony at the end of each cycle, or complete movement circuit of the sprocket chain links. The push pegs of the chain links are positioned so as to act against the circumferential surface of the container along a line shifted substantially from the centre line of the container, so as to oblige the latter, during its changeover movement, to rest on a side wall of the fixed platform to guide it in its changeover translation movement.

With reference to the above, the attached Figures illustrate a preferred solution which is neither binding nor limiting concerning the relative positions of the components and the simplifications which could result; this solution will be described below with reference to the following Figures:

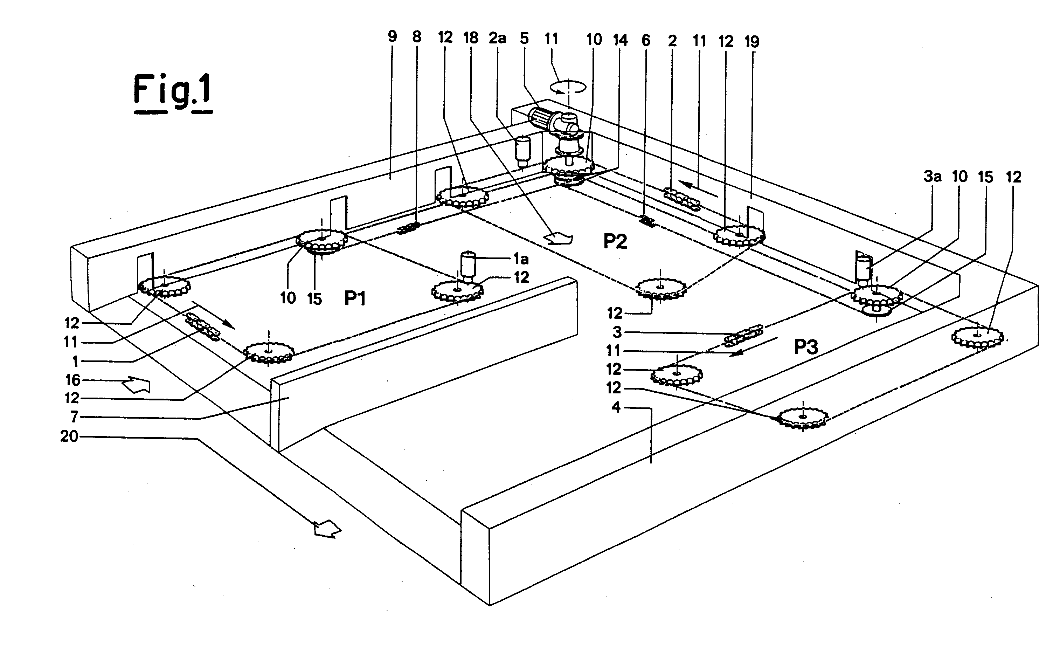

- Fig. 1 is an axonometric perspective view of the device of this invention showing a schematic configuration of three sprocket chain links together with the single drive motor with the relevant transmission of the movement to the toothed wheels, which actuate the said links each of which has a single push peg;

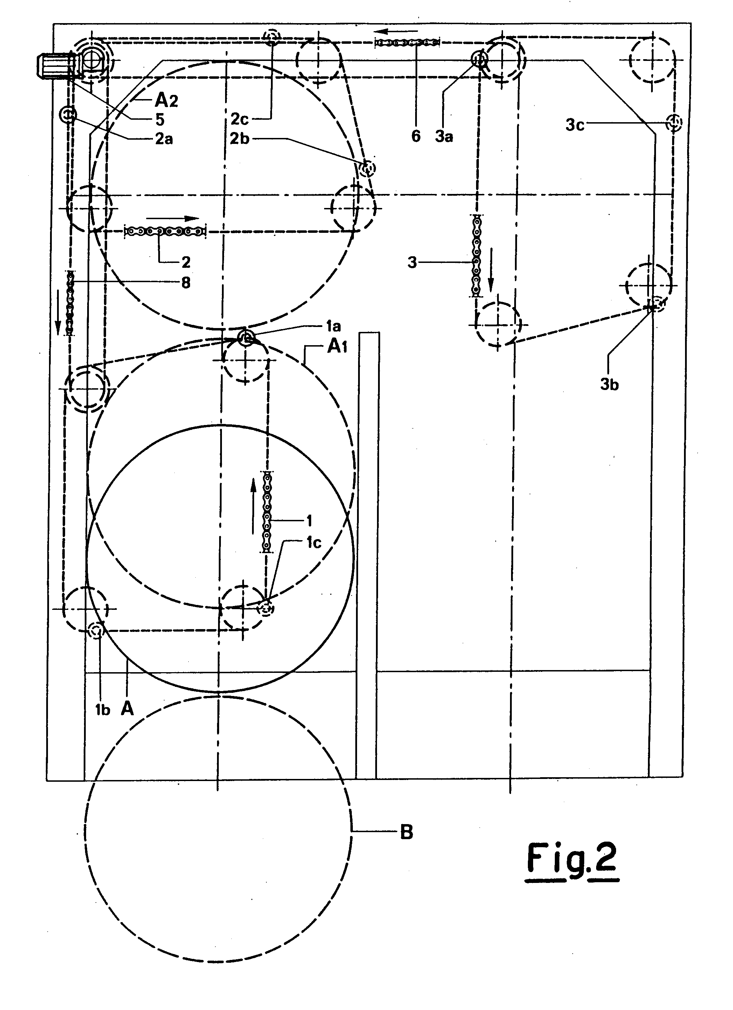

- Fig. 2 is a schematic view from above of the device of this invention which shows the configuration at the moment when the push pegs on the three sprocket chain links start moving, while the service operator has prepared at the inlet of the fixed platform the first containers to be advanced automatically;

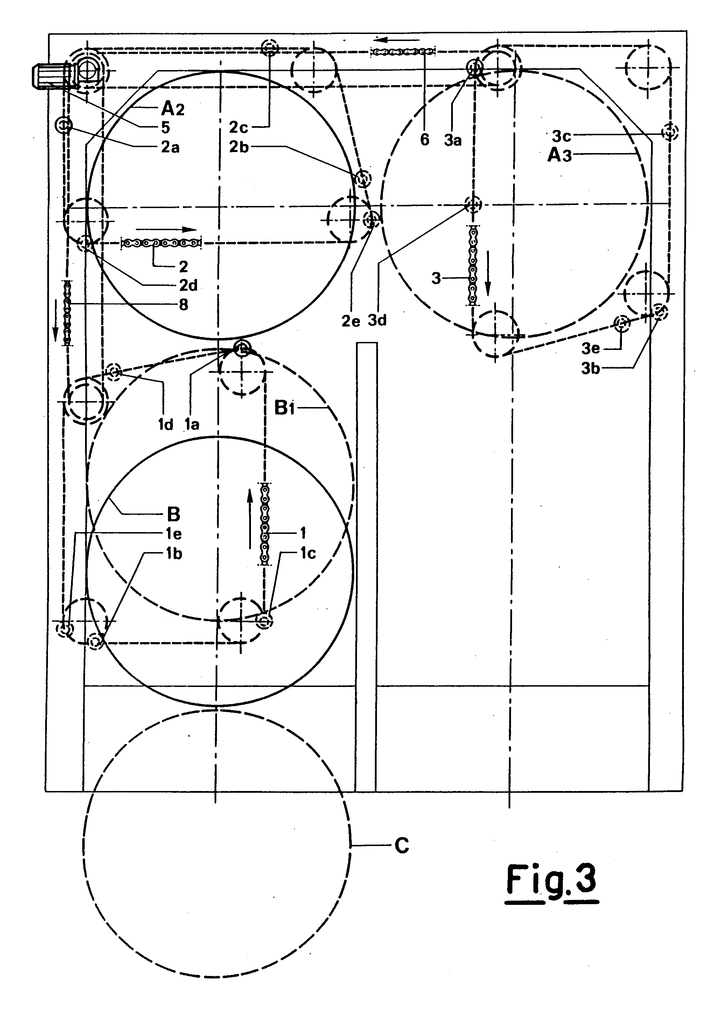

- Fig. 3 is a schematic view from above of the device of this invention which shows the configuration at the moment when the first container is advanced into the position corresponding to the shift imparted by a complete circuit of the push pegs on the sprocket chain links, while the second container is pushed by the service operator to the inlet of the fixed platform ready to be advanced automatically;

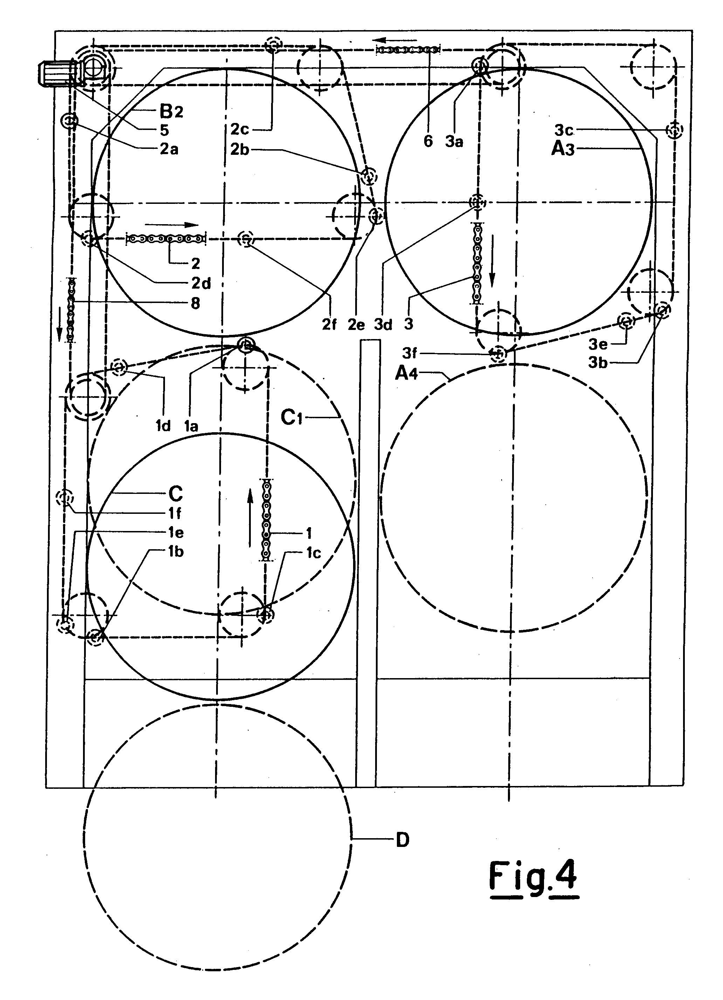

- Fig. 4 is a schematic view from above of the device of this invention which shows the configuration at the moment when the first container is fed into the filling position corresponding to the shift imparted by a subsequent complete circuit of the push peg on the sprocket chain links, while the second container is positioned in the position made available by the first container and the third container is pushed by the service operator to the inlet of the fixed platform ready to be advanced automatically in the subsequent movement circuit of the push pegs after the first container has been filled with fibre web emerging from the drawing head on the drawing frame.

In the Figures, components which are the same, or which have the same or equivalent functions, have the same references. These references are as follows: 1 is the first sprocket chain link positioned at the inlet 16 of the fixed platform 13; 1a is a peg attached as a single piece to a component of the sprocket chain 1 and the said peg 1a is in a vertically projecting position to make it project from the plane of the platform 13 sufficiently to push on the base of the containers; 2 is the second sprocket chain link positioned after the chain link 1; 2a is a peg attached as a single piece to a component of the sprocket chain 2 and the said peg 2a is in a vertically projecting position the same as peg 1a; 3 is the third sprocket chain link positioned after the chain link 2 and it corresponds to the station for filling a container for fibre web emerging from the drawing head (not illustrated); 3a is a peg attached as a single piece to a component of the sprocket chain 3 and the said peg 3a is in a vertically projecting position the same as pegs 1a and 2a; 4, 9 and 19 are the box-section side walls of the fixed platform 13.

These walls have slots through which the push pegs enter and leave the box structure of the walls (see Figure 1) so that they can operate without the slightest chance of interfering with the containers present on the platform 13; 7 is the halfway wall of the fixed platform 13 and the said wall divides the inlet side 16 of the empty containers from the outlet side 20 of the containers filled with fibre web; 18 is the arrow which indicates the transversal movement of the empty container being transferred under the filling station; 5 is the drive source, or any motor, which drives the entire device of this invention by activating the rotation 11; 6 is a chain, or any linked component, which transmits drive from the toothed drive wheel 14 to the toothed wheel 15; the latter is fitted as a single piece on the toothed wheel 10 which engages in the sprocket chain link 3, which turns in an anticlockwise direction in accordance with the arrow 11 and winds around the free-running relay toothed wheels 12, to close on itself; 8 is a chain, on any linked component, which transmits drive from the toothed drive wheel 14 to the toothed wheel 15; the latter is fitted as a single piece on the toothed wheel 10 which engages in the sprocket chain link 1, which turns in an anticlockwise direction in accordance with the arrow 11 and winds around the free-running relay toothed wheels 12, to close on intself; the toothed wheel 10, fitted directly on the output shaft of the motor 5, engages in the sprocket chain link 2, which turns in an anti-clockwise direction in accordance with the arrow 11 and winds around the free-running toothed wheels 12, to close on itself; P1, P2 and P3 are the basically horizontal drive surfaces of the chain links 1, 2 and 3. These planes are basically on the same level and they lie under the plane of the platform 13, the latter also acts as a surface for the support and movement of the containers. The only components which emerge from the said supporting surface are the push pegs 1a, 1b and 1c, and they are in a vertical position since their task is to approach and push the containers; 13 is the platform, in structure, acting as a cover for the entire device of this invention.

The said platform 13 may consist of a surface with load-bearing free-running rollers, to facilitate the movement thrust of the containers along both the inlet side 16 and the outlet side 20.

The operation of the device covered by this invention, for the changeover of containers for the fibre web coming out of the drawing head of a drawing frame, shown on the attached Figures, in easy to imagine.

Before starting up production of a textile drawing frame, the service operator prepares and positions a container A at the inlet 16 of the platform 13. The motor 5 is started up, and it will perform the necessary number of rotations to make the push pegs on the three sprocket chain links 1, 2 and 3 execute a full circuit.

The initial presence of a single container A will make only the push pin 1a work to move the container. With reference to Figure 2, the push peg of the link 1 will move from its initial starting position 1a to position 1b of approach to the circumferential surface of the container A. Proceeding in a continuous manner, it will move to position 1c, moving the container to position A1. From this point, continuing its movement, the push peg will move to position 1a, thus returning to its starting position. During the passage of the peg from 1c to 1a, the container is pulled from position A1 to position A2 and during this movement the push peg forces the container A to come up to and slide against the side wall 9. This peg pushed the container beyond its central line, so there is a slight push factor of the container against the side wall 9, which acts as a guide for tis transfer from position A1 to position A2. At the same time the other two push pegs on the other two sprocket chain links move respectively from positions 2a and 3a to positions 2b and 3b, then move to positions 2c and 3c and finally return to the starting positions 2a and 3a. These last movements of the push pegs do not move any container since there is no container present in their area of action. Incidentally, the positions marked with the letter a or the letter b or the letter c reflect the same instant of positioning of the three push pegs, i.e. they are synchronous positions which arise since the three sprocket chain links are equal. At this point a new container B is inserted by the service operator at the inlet position 16 of the platform 13. The motor 5 is started up again to make the three pushing pegs perform a new complete circuit.

With reference to Figure 3, the push peg on the chain link 1 moves from its starting position 1a to position 1d, continues to position 1 and arrives at position 1b where it approaches the surface of the container B and starts to push it to position B1, pulls it to occupy position A2 of the container A, and in the latter position the peg resumes its initial position 1a.

Meanwhile, moving at exactly the same time, the container A2 moves to position A3 under the pushing force of the peg of the chain link 2. The push peg moves from position 2a to position 2d and continues to positions 2e, 2b and 2c, and finally occupies its starting position 2a. Meanwhile, at exactly the same time, the push peg of the chain link 3 departs from 3a, continues to 3d, 3e, 3b and 3c and finally returns to its starting position 3a.

At the end of this second transfer cycle, the container A is in the filling position. The drawing frame is started up and the fibre web emerging from the drawing head is fed, by means of a known rotating device, into container A in a spiral shape. After container A is filled, the motor 5 is started up for a subsequent cycle of movements. In this progressive third complete circuit of the three push pegs, the already filled container A moves from position A3 to position A4, the empty container B2 moves to position A3, ready to be filled with fibre web, while container C first moves to C1 and then continues its movement until it occupies position B2, and in the meantime a new container D is prepared at the inlet 16 of platform 13, all of which is illustrated in Figure 4.

Incidentally, the above-mentioned movements of the containers are the result of the pushing forces of the pegs on the chain links 1, 2 and 3 together with the guiding support from the side walls 9, 19 and 4 of the fixed platform 13.

The push pegs start moving simultaneously and accomplish a complete circuit in perfect synchrony, at the same time repositioning themselves in the three starting positions 1a, 2a and 3a.

In figure 4, the positions of the three pegs indicated by the same letter indicate simultaneous positions, i.e. positions assumed at the same moment of movement.

When the push peg of link 1 assumes position 1C, for example, the push peg of the link 2 is located at position 2C and the push peg of the link 3 is located at position 3C. The same letters indicate the simultaneous positions of the three push pegs. At every filled container, the motor 5 activates a complete circuit of the three pegs and the container full of fibre web is quickly replaced by the empty container without the slightest overwaiting and without any manual intervention by the service operator.

It is only by way of example that there have been suggested three sprocket chain links for the simultaneous movement of three containers since there may be more than three sprocket chain links for the simultaneous movement of more than three containers; there may also be several modifications of the push pegs, the pulling sprocket chain, the side guide walls and the platform sliding surface, with regard to shape and dimensions and their positioning and attachment methods, without this resulting in a departure from the scope of the invention.

**Claims**

1. Device for the changeover of containers for fibre web emerging from the drawing head of a drawing frame for drawing fibres, in which the fibre web is fed continuously into the container which is located in the filling station connected to an overlying rotary device which guides the web in a precise deposit position, while empty containers, waiting on a fixed platform, are ready for the automatic changeover between the filled containers and empty containers, said device being characterized by the fact that it has a system with several sprocket chain links where each sprocket chain link, moving on a basically horizontal plane, moves and pushes the individual container with a peg, which is attached to a component of the chain as a single piece, and in a vertical position projecting from the plane of movement of the said chain link.

2. Device for the changeover of fibre web containers, in accordance with claim 1, characterized by the fact that the sprocket chain links are moved by the same drive source and each has only one push peg.

3. Device for the changeover of fibre web containers, in accordance with claim 1, characterized by the fact that the sprocket chain links are of the same length and they move simultaneously by means of toothed drive wheels which are the same in order to obtain the same movements and the same movement cycles which permit the initial positions to be resumed by the push pegs in perfect synchrony.

4. Device for the changeover of fibre web containers, in accordance with claim 1, characterized by the fact that the push pegs are positioned to act against the circumferential surface of the individual container along a line basically moved by the central line of the container to force the latter in its translation movement or to rest against a side wall of the fixed platform to guide it in its changeover movement.

Fig.1

EP 0 469 660 A1

**Fig.2**

**Fig.3**

**Fig.4**

## DOCUMENTS CONSIDERED TO BE RELEVANT | EP 91201777.9

| Category | Citation of document with indication, where appropriate, of relevant passages | Relevant to claim | CLASSIFICATION OF THE APPLICATION (Int. Cl.5) |
|---|---|---|---|
| A | US - A - 3 435 485 (STRIEPEL) * Fig. 1 * | 1,4 | B 65 H 54/76 B 65 G 19/02 B 65 G 23/34 |
| A | US - A - 4 477 945 (VIGNON) * Fig. 2 * | 1,4 | |
| A | US - A - 3 323 177 (BINDER) * Fig. 1 * | 1,4 | |
| A | EP - A2 - 0 296 386 (KRUPP) * Fig. 1; abstract * | 1,4 | |

TECHNICAL FIELDS
SEARCHED (Int. Cl.5)

B 65 G
B 65 H

The present search report has been drawn up for all claims

| Place of search | Date of completion of the search | Examiner |
|---|---|---|
| VIENNA | 12-09-1991 | BAUMGARTNER |

EPO FORM 1503 03.82 (P0401)